# EUROPEAN PATENT APPLICATION

(11) **EP 2 639 692 A2**
(43) Date of publication of application: **18.09.2013**
(21) Application number: 13153426.5
(22) Date of filing: 31.01.2013
(51) Int. Cl.: G06F 9/44, G06F 11/07

(54) **Memory dump program, information processing apparatus, and memory dump method**

(30) Priority: 12.03.2012 JP 2012055137
(71) Applicant: FUJITSU LIMITED, Kawasaki-shi, Kanagawa 211-8588 (JP)
(72) Inventor: Musha, Yuichi, Kanagawa, 211-8588 (JP); Endo, Shin, Kanagawa, 211-8588 (JP)
(74) Representative: HOFFMANN EITLE

(57) **Abstract**

An information processing apparatus (1) includes: a boot processing unit (2, 15) configured to perform a boot process performed in a prior stage that includes processes up to activation of an operating system program by using a first storage area of a storage apparatus; a storage area allocating unit (3, 54) configured to allocate a second storage area to the storage apparatus before the boot process is performed; and an output unit (4, 52) configured to output first storage area information, which is stored in the first storage area, to the second storage area when an abnormality occurs in the boot process.

## Description

### FIELD

The embodiments described herein are related to a memory dump technology of an information processing apparatus.

### BACKGROUND

In a virtualized environment, a piece of software that performs booting and an operating system (OS) are examples of types of software on virtualized firmware. In a temporal axis upon activating an OS, software that performs booting (a boot loader) and the OS do not coexist with each other.

A boot loader constructs configuration information of a device such as a peripheral component interconnect (PCI) device that is recognized after the system is powered up and hands over this configuration information to an OS. The OS constructs the system using the configuration information.

While the boot loader is being operated, hardware may fail or software that is operated on virtualized firmware may make no response. In this case, a memory dump of the boot loader is investigated.

When an abnormality occurs in the boot loader while it is being operated, virtualized firmware that monitors the boot loader senses the abnormality, and the control transitions to the virtualized firmware. The virtualized firmware then causes the control to transition to another memory area for an error process within the boot loader that is different from the portion at which the abnormality occurs. After this, the virtualized firmware passes the control to the boot loader. Accordingly, the boot loader performs a determined error process.

A technology exists related to a dump collecting mechanism that automatically selects external storage devices not including an external storage device in which a fault occurs and that collects dumps. In the technology related to the dump collecting mechanism, when a fault occurs in an external storage device, a device number of the external storage device is stored in a fault record table. As in the case of giving an instruction to start up, a boot loader developed by a main storage device causes file loading means to read a dump device management file and a fault recording file from an external storage device and causes table preparation means to prepare a dump device management table. The boot loader defines, as a dump area, a dump area of an external storage device defined in the dump device management table and causes memory dump collecting means to collect images of the main storage device remaining at that moment in the dump area.
Japanese Laid-open Patent Publication No. 09-091178

### SUMMARY

Accordingly, the present embodiment provides a technology of enabling a memory dump of a boot loader to be output.

In an aspect of the present embodiment, an information processing apparatus includes a storage apparatus and a processor. Using a first storage area of the storage apparatus, the processor performs a boot process performed in a prior stage that includes processes up to the process of activating an operating system program. Before the boot process is performed, the processor allocates a second storage area to the storage apparatus. When an abnormality occurs in the boot process, the processor outputs first storage area information, which is stored in the first storage area, to the second storage area.

### BRIEF DESCRIPTION OF DRAWINGS

FIG. 1 illustrates an example of an information processing apparatus in accordance with the present embodiment.
FIG. 2 illustrates an information processing apparatus in accordance with an example of the present embodiment.
FIG. 3 illustrates an example of a hardware resource of the information processing apparatus in accordance with the present embodiment.
FIG. 4 illustrates an exemplary configuration of the information processing apparatus in accordance with the present embodiment.
FIG. 5 illustrates an example of an entire flow of the present embodiment.
FIG. 6 illustrates an exemplary flow of a logic-domain constructing process in accordance with the present embodiment.
FIG. 7 illustrates an exemplary flow of a copy process in accordance with the present embodiment.
FIG. 8 illustrates an example of an activation flow of a boot loader in accordance with the present embodiment.
FIG. 9 illustrates an exemplary configuration of an information processing apparatus in accordance with the present embodiment (Example 1).
FIG. 10 illustrates an exemplary format of a memory area used by a boot loader in accordance with the present embodiment (Example 1).
FIG. 11A illustrates an exemplary flow (pattern 1) of a logic-domain constructing process in accordance with the present embodiment (Example 1).
FIG. 11B illustrates an exemplary flow (pattern 2) of the logic-domain constructing process in accordance with the present embodiment (Example 1).
FIG. 12 illustrates an exemplary flow of a process for activating an extended memory domain in accordance with the present embodiment (Example 1).
FIG. 13 illustrates an exemplary configuration of an information processing apparatus in accordance with the present embodiment (Example 2).
FIG. 14A illustrates an exemplary flow (pattern 1) of a logic-domain constructing process in accordance with the present embodiment (Example 2).
FIG. 14B illustrates an exemplary flow (pattern 2) of the logic-domain constructing process in accordance with the present embodiment (Example 2).

### DESCRIPTION OF EMBODIMENTS

For a highly reliable server for which early restoration from a fault and early investigation into the cause of the fault are needed, an abnormality which occurs in the activating of the apparatus needs to be removed early. Accordingly, to investigate an abnormality which occurs in a boot loader, a memory dump needs to be investigated.

However, there is no device that outputs a memory content of a boot loader. Boot loaders do not have a function to write data in or read data from an external storage device, e.g., a function as disclosed in the technology related to the dump collecting mechanism.

As described above, there are no devices that output a memory content of a boot loader. The external storage device described in the technology related to the dump gathering mechanism is supposed to be a nonvolatile storage apparatus such as a hard disk drive, and the boot loader does not have a function for reading data from or writing data to a nonvolatile storage apparatus. To add a function for performing a process of reading data from or writing data to the external storage apparatus described in the technology related to the dump collecting mechanism, a driver or a dedicated code needs to be added. However, due to a limited capacity of a storage area in which the boot loader is stored, it is difficult to add to the boot loader the function for performing a process of reading data from or writing data to the external storage apparatus. In addition, the external storage apparatus is occupied by an OS, and an area to be used by the boot loader is not ensured. Moreover, the OS does not include an interface that reports an area used by the boot loader.

Accordingly, the present embodiment provides a technology of enabling a memory dump of a boot loader to be output.

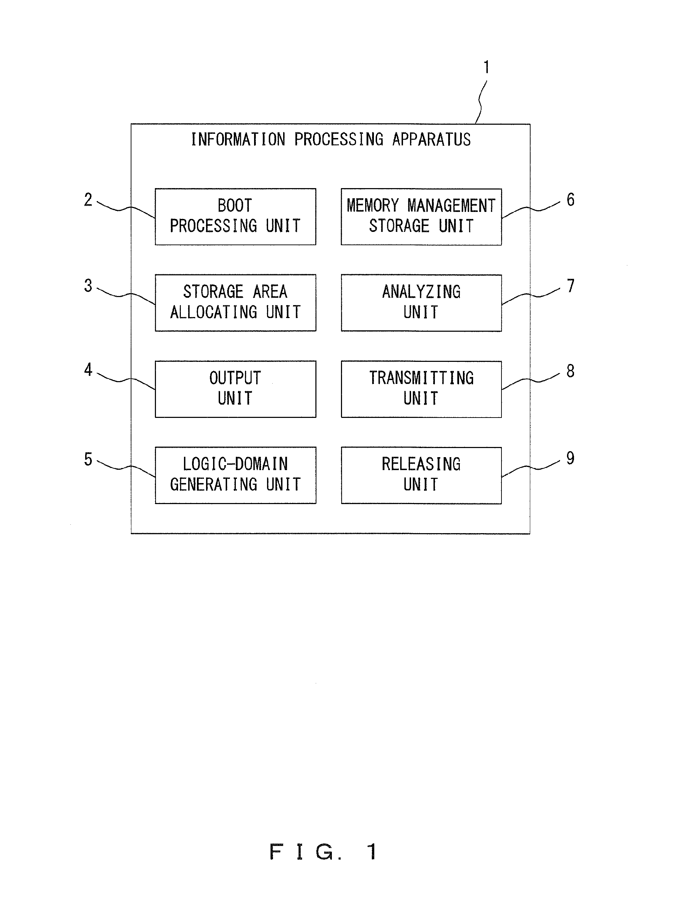

FIG. 1 illustrates an example of an information processing apparatus in accordance with the present embodiment. An information processing apparatus 1 includes a boot processing unit 2, a storage area allocating unit 3, and an output unit 4.

Using a first storage area of the storage apparatus, the boot processing unit 2 performs a boot process performed in a prior stage that includes processes up to the process of activating an operating system program. An example of the boot processing unit 2 is a boot loader 15. An example of the storage apparatus is a nonvolatile memory apparatus.

Before a boot process is performed, the storage area allocating unit 3 allocates a second storage area to the storage apparatus. A constructing unit 54 is an example of the storage area allocating unit 3. A memory area of an extended memory domain 56 is an example of the second storage area.

When an abnormality occurs in the boot process, the output unit 4 outputs first storage area information stored in the first storage area to the second storage area. A copy unit 52 is an example of the output unit 4.

Such a configuration enables a memory dump of the boot loader.

The information processing apparatus 1 may further include a logic-domain generating unit 5. For each logic domain that is a unit of service for allocating a hardware resource to a virtual machine, the logic-domain generating unit 5 allocates a hardware resource to a virtual machine so as to generate a logic domain. Virtualized firmware 16 is an example of the logic-domain generating unit 5.

In this case, before the boot process is performed, when the second storage area is not present, the storage area allocating unit 3 allocates the second storage area to the storage apparatus in relation to a logic domain corresponding to the boot process.

Such a configuration may achieve a memory dump of the boot loader in a virtualized environment.

The information processing apparatus 1 may further include a memory management storage unit 6. The memory management storage unit 6 stores the value of a storage capacity of the second storage area and memory address information of a memory that is capable of allocating the second storage area. An extended-memory-data register 24 is an example of the memory management storage unit 7. In this case, before the boot process is performed, when the second storage area is not present, the storage area allocating unit 3 allocates the second storage area to the storage apparatus using a value that is equal to or higher than the value of the storage capacity of the first storage area and the memory address information. Simultaneously, the storage area allocating unit 3 stores in the memory management storage unit 6 a value that is equal to or higher than the value of the storage capacity of the first storage area and the memory address information.

In this case, using a value that is equal to or higher than the value of the storage capacity of the first storage area and the memory address information stored in the memory management storage unit 6, the output unit 4 outputs to the second storage area first storage area information stored in the first storage area.

Such a configuration allows the memory management storage unit 6 to be used as an interface of a logic domain, a boot loader, or virtualized firmware.

The information processing apparatus 1 may further include an analyzing unit 7. When the first storage area information is present in the second storage area, the analyzing unit 7 analyzes the first storage area information. An analyzing unit 53 is an example of the analyzing unit 7.

The information processing apparatus 1 may further include a transmitting unit 8. Before the boot process is performed, when the first storage area information is present in the second storage area, a transmitting unit 8 transmits the first storage area information to an external apparatus. A transmitting unit 81 is an example of the transmitting unit 8. A subsystem 18 is an example of the external apparatus.

Such a configuration allows a memory dump of the boot loader to be transmitted to the external apparatus so that the memory dump of the boot loader can be analyzed on the external-apparatus side.

The information processing apparatus 1 may further include a releasing unit 9. After the boot process is completed, the releasing unit 9 releases the second storage area. The virtualized firmware 16 is an example of the releasing unit 9.

Such a configuration allows the second storage area that becomes unnecessary upon completion of a memory dump to be erased.

The information processing apparatus in accordance with the present embodiment will be further described in the following.

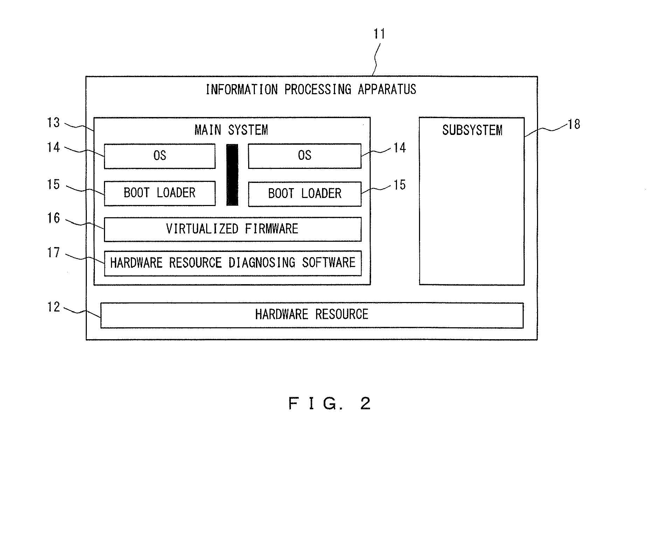

FIG. 2 illustrates an information processing apparatus in accordance with an example of the present embodiment. An information processing apparatus 11 includes a hardware resource 12, a main system 13, and a subsystem 18. The hardware resource 12 indicates a physical resource that forms the main system 13 and the subsystem 18.

In a virtualized environment, the main system 13 performs processes for the information processing apparatus 11. That is, a plurality of virtual machines (VMs) are operated in the main system 13. Accordingly, an operating system (OS) may be operated at each VM using a virtualization technology. As a result, a plurality of OSs may be operated in parallel on the main system 13. The subsystem 18 manages operations of the main system 13.

The main system 13 includes an OS 14, a boot loader 15, virtualized firmware 16, and hardware resource diagnosing software 17. The hardware resource diagnosing software 17 performs a power-on self test (POST).

The virtualized firmware 16 is a control program for constructing a virtualized environment (a hypervisor). The virtualized firmware 16 allows the OS 14 to be operated at each VM. The boot loader 15 is software that boots the OS 14. In the main system 13, the OS 14 and the boot loader 15 are operated independently for each logic domain. The logic domain is a virtual machine obtained by logically grouping a CPU, a memory, and an I/O device.

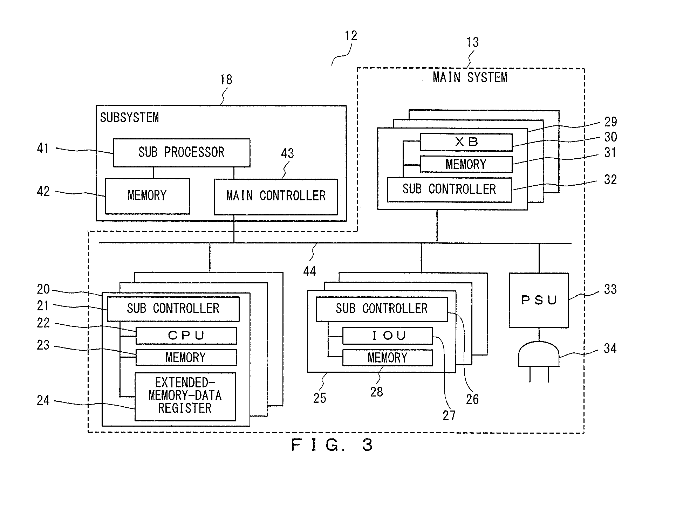

FIG. 3 illustrates an example of a hardware resource of the information processing apparatus in accordance with the present embodiment. FIG. 3 illustrates an example of the hardware resource 12 in FIG. 2. The main system 13 includes a CPU board 20, an IOU board 25, an XBU board 29, a PSU board 33, and a plug 34. A subsystem 10, the CPU board 20, the IOU board 25, the XBU board 29, and the PSU board 33 are connected via a maintenance bus 44.

The CPU board 20 includes a sub controller 21, a CPU (central processing unit) 22, a memory 23, and an extended-memory-data register 24. The sub controller 21 communicates with a main controller 43. The CPU 22 controls operations of the entirety of the CPU board 20. The memory 23 is a volatile or nonvolatile storage apparatus that records information. As will be described hereinafter, the extended-memory-data register 24 is a storage apparatus that stores a memory address of an extended-memory domain and a memory size of the extended-memory domain.

The IOU (input output unit) board 25 includes a sub controller 26, an IOU (input output unit) 27, and a memory 28. The sub controller 26 communicates with the main controller 43. The IOU 27 controls inputs and outputs. The memory 28 is a volatile or nonvolatile storage apparatus that records information.

The XBU (crossbar unit) board 29 includes an XB (crossbar) 9, a memory 31, and a sub controller 32. The XB (crossbar) 30 controls a route selection for data communication between a plurality of CPUs or memories within a large-scale information processing system. The memory 31 is a volatile or nonvolatile storage apparatus that records information. The sub controller 21 communicates with the main controller 43.

The PSU (power supply unit) board supplies to each board electric power obtained from the plug 34.

The subsystem 18 includes a sub processor 41, a memory 42, and a main controller 43. The sub processor 41 controls operations of the main system 13 via a main controller 112. The memory 42 is a storage apparatus that records information. The main controller 43 communicates with the sub controllers 21, 26 and 32.

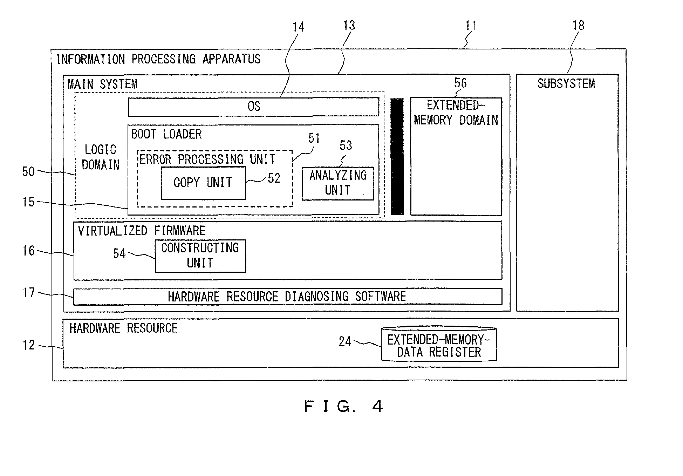

FIG. 4 illustrates an exemplary configuration of the information processing apparatus in accordance with the present embodiment. The information processing apparatus 11 includes the main system 13, the subsystem 18, and the hardware resource 12. The main system 13 includes the OS 14, the boot loader 15, the virtualized firmware 16, the hardware resource diagnosing software 17, and the extended memory domain 56.

In the main system 13, the OS 14 and the boot loader 15 are operated independently for each logic domain 50. The logic domain 50 is a virtual machine obtained by logically grouping a CPU, a memory, and an I/O device.

The extended memory domain 56 is the logic domain 50 to which a memory area is allocated. As will be described hereinafter, a copy of a content of a memory used by the boot loader 15 is stored in the memory area (the extended memory area) used by the extended memory domain 56. As an example, a volatile memory apparatus may be used as a memory that ensures the memory area used by the boot loader 15 and the memory area used by the extended memory domain 56.

The hardware resource 12 includes the extended-memory-data register 24. The extended-memory-data register 24 stores a memory address of the memory area used by the extended memory domain 56 and a memory size of the memory area used by the extended memory domain 56.

The virtualized firmware 16 controls constructing of a virtualized environment, activates the extended memory domain 56, and monitors operations of the boot loader 15. When the virtualized firmware 16 senses an abnormality in the boot loader 15, the virtualized firmware 16 calls up and causes the boot loader 15 to perform an error process.

The virtualized firmware 16 includes the constructing unit 54. At the activating of the main system 13, the constructing unit 54 sets the memory address and the size of a memory area of the extended memory domain 56 to the extended-memory-data register 24. Using the memory address and memory size that have been set to the extended-memory-data register 24, the constructing unit 54 activates, for a certain logic domain 50, the extended memory domain 56 to which the memory area is allocated.

The boot loader 15 boots the OS 14 and performs an error process of a boot process. The boot loader 15 includes an error processing unit 51. The error processing unit 51 performs an error process when the virtualized firmware 16 senses an abnormality in the boot loader. The error processing unit 51 includes the copy unit 52. The copy unit 52 copies all of the contents of a memory used by the boot loader 15 to a memory area of the extended memory domain 56.

The boot loader 15 includes the analyzing unit 53. The analyzing unit 53 analyzes information copied to the memory area of the extended memory domain 56 (a memory content (memory dump) of the boot loader 15). As an example, the analyzing unit 53 may output the information copied to the memory area of the extended memory domain 56 as binary data or may analyze and output the copied information as text data by using a predetermined dictionary. The analyzing unit 53 outputs the analyzed data to an I/O apparatus such as a console.

In this way, in the present embodiment, the extended memory domain 56 is added to the main system 13. This allows a content of a memory used by the boot loader 15 to be output to a memory area of the extended memory domain 56 and allows a storage area used for a memory dump by the boot loader 15 to be ensured. Moreover, in the present embodiment, adding the extended-memory-data register 24 to the main system 13 enables a storage area used by the boot loader 15 to be reported to the boot loader.

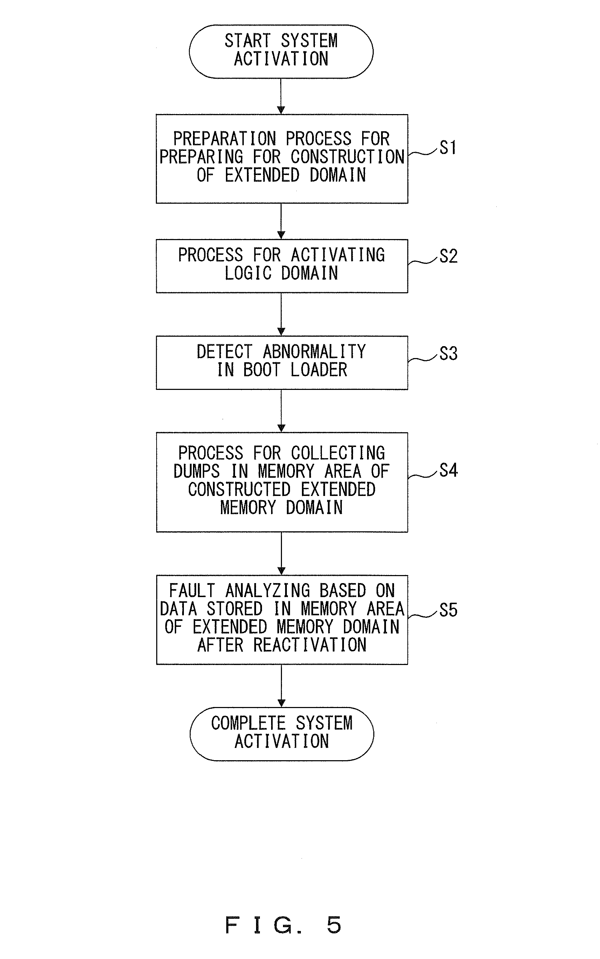

FIG. 5 illustrates an example of an entire flow of the present embodiment. When activation of the main system 13 is started, a preparation process for preparing for construction of the extended memory domain 56 is performed (S1). In S1, in consideration of the fact that the boot loader 15 is capable of accessing without limitation a memory area for which the virtualized firmware 16 has given access permission, the virtualized firmware 16 constructs the extended memory domain 56 in order to collect memory dumps of the boot loader 15.

Next, a process for activating the logic domain 50 is performed (S2). In S2, the virtualized firmware 16 allocates hardware resources 12 such as a CPU, a memory, and an I/O apparatus to a logic domain to be activated. After this, using the extended-memory-data register 24, the virtualized firmware 16 reports, to the logic domain 50, access information on access to the extended memory domain 24 (the memory address and the memory size of a memory area of the extended memory domain 56). When there are one or more extended-memory-data registers 24, the virtualized firmware 16 may report, to the logic domain 50, information for identifying the extended-memory-data registers 24.

Next, the boot loader 15 is activated. Assume that an abnormality occurs in the boot loader 15 while the boot loader 15 is being operated (S3). Then, the virtualized firmware 16 passes the control to the boot loader 15 by shifting a process for addressing the error to a memory area within the boot loader 15 that is different from the memory area in which the abnormality occurs.

Accordingly, a process for collecting dumps in a memory area of the constructed extended memory domain 56 is performed (S4). In this case, using access information that is set to the extended-memory-data register 24, the boot loader 15 copies all information held in the memory area of the boot loader 15 to a memory area of the extended memory domain 56. After this, the boot loader 15 makes a request for the virtualized firmware 16 to reset the logic domain 50. The virtualized firmware 16 actives the logic domain 50 again. Note that a logic domain 50 to be next activated uses another hardware resource 12.

After the logic domain 50 is reactivated, the fault is analyzed according to the data copied to the memory area of the extended memory domain 56 (S5). In S5, after the logic domain 50 is reactivated, the boot loader 15 analyzes the data in the memory area of the extended memory domain 56 by using a memory address and a memory size of the extended memory domain 56, both of which are set in the extended-memory-data register 24. After this, a maintenance person of the system analyzes the fault according to the analysis result. In this way, the activation of the system is completed.

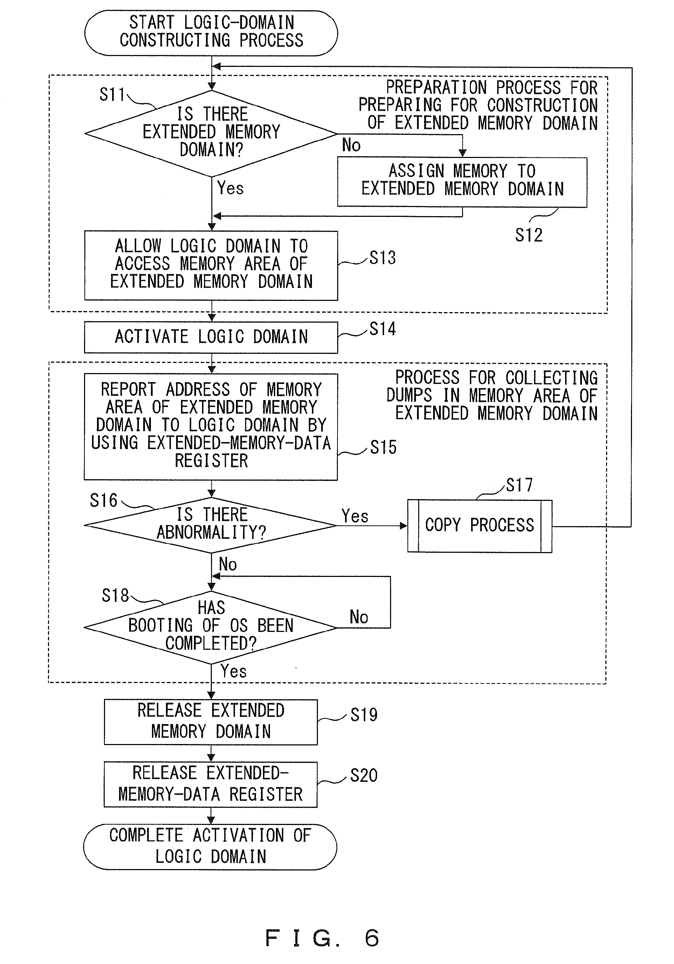

FIG. 6 illustrates an exemplary flow of a logic-domain constructing process in accordance with the present embodiment. Details of the flow in FIG. 5 are illustrated in FIG. 6. FIG. 6 illustrates an operation of the information processing apparatus 11 illustrated in FIG. 4 and collecting of memory dumps in an extended memory domain in the case of a fault occurrence. In FIG. 6, just after the logic-domain constructing process is started, the virtualized firmware 16 performs the preparation process for preparing for construction of an extended memory domain as described with reference to FIG. 5. After this, the virtualized firmware 16 activates the logic domain 50. In the following, details of these processes will be indicated.

The virtualized firmware 16 determines whether there is an extended memory domain 56 within the main system 13 (S11). In this case, according to whether or not effective information is stored in the extended-memory-data register 24, the virtualized firmware 16 determines whether there is an extended memory domain 56.

When it is determined that there is not an extended memory domain 56 ("No" in S11), the virtualized firmware 16 (the constructing unit 54) allocates a memory area to an extended memory domain 56 in order to construct an extended memory domain 56. That is, the constructing unit 54 sets, to the extended-memory-data register 24, an allocatable memory address and a size that is equal to or greater than the memory size (fixed) of the boot loader 15.

When it is determined in S11 that there is an extended memory domain 56 ("Yes" in S11), i.e., when a request to reset the logic domain is made in S17, which will be described hereinafter, and the process of S11 is performed again, the virtualized firmware 16 performs the following processes. That is, the virtualized firmware 16 allows the logic domain 50 to access a memory area of the extended memory domain 56 (S13). Also after the process of S12, the virtualized firmware 16 allows the logic domain 50 to access the memory area of the extended memory domain 56 (S13). The virtualized firmware 16 activates the logic domain 50 (S14).

Using the extended-memory-data register 24, the virtualized firmware 16 reports the memory address of the memory area of the extended memory domain 56 to the logic domain 50 (S15). When there are one or more extended-memory-data registers 24, the virtualized firmware 16 may report, to the logic domain 50, information for identifying the extended-memory-data registers 24. After this, the virtualized firmware 16 activates the boot loader 15.

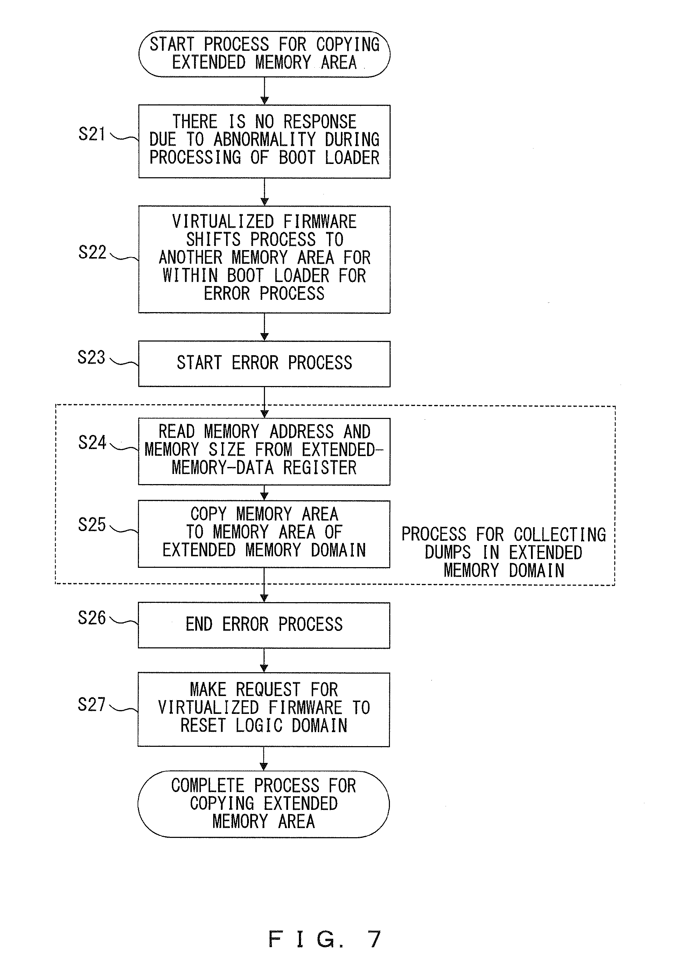

The activation of the boot loader 15 starts. When an abnormality occurs in the boot loader 15 during the activation ("Yes" in S16), the virtualized firmware 16 senses this abnormality and shifts the control to the boot loader. Accordingly, the boot loader 15 (the copy unit 52) copies a content of the memory area which the boot loader 15 uses to the memory area of the extended memory domain 56 (S17). The process of S17 will be described in detail with reference to FIG. 7. When an abnormality does not occur in the boot loader 15 during the activation ("No" in S16), the boot loader 15 boots the OS 14 (S18).

After the OS 14 is activated, the virtualized firmware 16 releases the extended memory domain 56 (S19). Additionally, the virtualized firmware 16 releases the extended-memory-data register 24 (S20).

FIG. 7 illustrates an exemplary flow of a copy process in accordance with the present embodiment. In FIG. 3, descriptions will be given of details of a situation in which all contents of a memory area used by the boot loader 15 are dump-collected in a memory of an extended memory domain.

The virtualized firmware 16 watches for a no-response of the boot loader 15. In S16 of FIG. 6, when an abnormality occurs in the boot loader 15, the boot loader 15 makes no response (S21). Accordingly, the virtualized firmware 16 shifts the process to another memory area within the boot loader 15 that is different from the memory area in which the abnormality has occurred (S22). At this other memory area, the error processing unit 51 starts an error process (S23).

For access to the extended memory domain 56, firstly, the copy unit 52 reads the memory address and the memory size of the access destination from the extended-memory-data register 24 (S24). The copy unit 52 copies all information stored in the memory area which the boot loader 15 uses to the memory area of the extended memory domain. As a result, a process for collecting memory dumps of the boot loader in the memory area of the extended memory domain (an error process) ends (S26). After this, the error processing unit 51 makes a request for the virtualized firmware 16 to reset the logic domain 50 (S27).

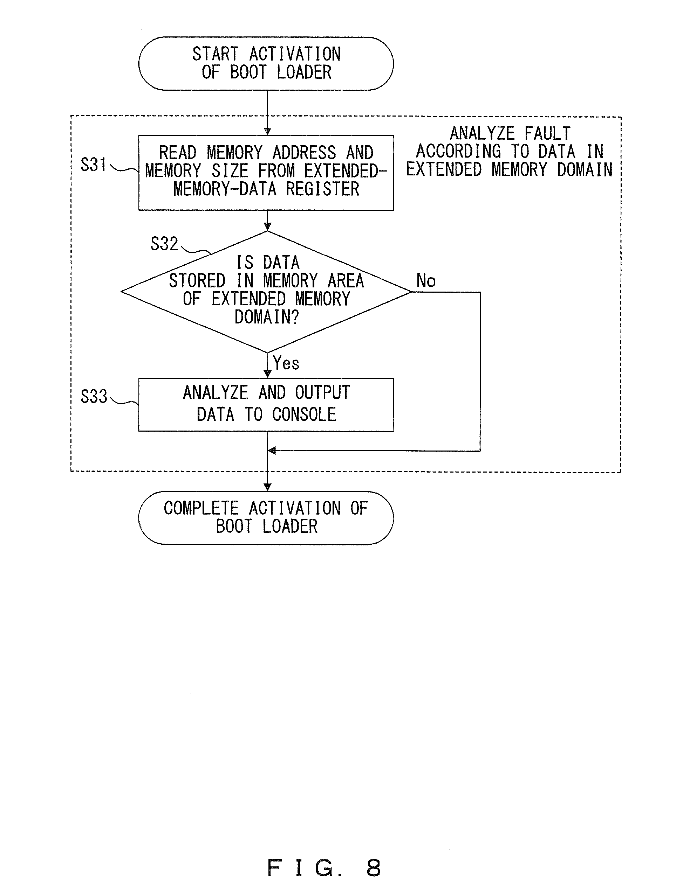

FIG. 8 illustrates an example of an activation flow of a boot loader in accordance with the present embodiment. Starting the activation of the boot loader 15 causes the boot loader 15 to read a memory address and a memory size of a memory area of the extended memory domain 56 from the extended-memory-data register 24 (S31).

Using the read memory address and the read memory size, the boot loader 15 accesses the memory area of the extended memory domain 56. When there is no data within the memory area of the extended memory domain 56 as a result of the accessing ("No" in S32), the activation of the boot loader 15 is completed.

When there is data within the memory area of the extended memory domain 56 in S32 as a result of the accessing ("Yes" in S32), the analyzing unit 53 analyzes and outputs the data obtained via the accessing to a console (S33). The activation of the boot loader 15 is then completed.

In accordance with the present embodiment, when an abnormality occurs in the boot loader 15, a memory dump of the boot loader 15 may be output to the extended memory domain 56. Accordingly, it is possible to analyze the memory dump of the boot loader. As a result, a fault may be specified early, thereby contributing to early restoration of the system.

Next, examples of the present embodiment will be described.

### (Example 1)

In Example 1, when an error occurs in a boot loader while the boot loader is being activated, an information processing apparatus copies content of a memory used by the boot loader to an extended memory domain. While the boot loader is being activated after the boot loader is reset, the information processing apparatus analyzes memory dump information stored in the extended memory domain. In Example 1, components or functions similar to those described above are indicated by like signs so that their descriptions can be omitted.

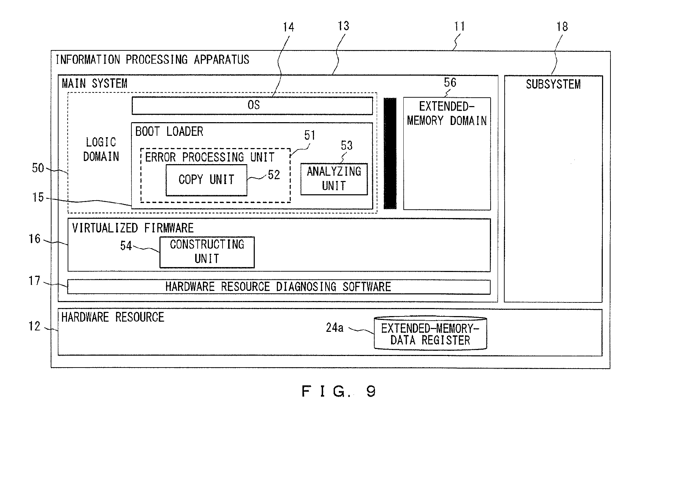

FIG. 9 illustrates a configuration of an information processing apparatus in accordance with the present embodiment (Example 1). With reference to FIG. 9, a situation will be described in which an extended-memory-data register 24a is used as an example of the extended-memory-data register 24. The components other than the extended-memory-data register 24a are the same as those in FIG. 4, and hence descriptions will not be given of these other components.

The extended-memory-data register 24a is two eight-byte registers but is not limited to these values. The extended-memory-data register 24a may store a memory address and a memory size of a memory area of the extended memory domain 56.

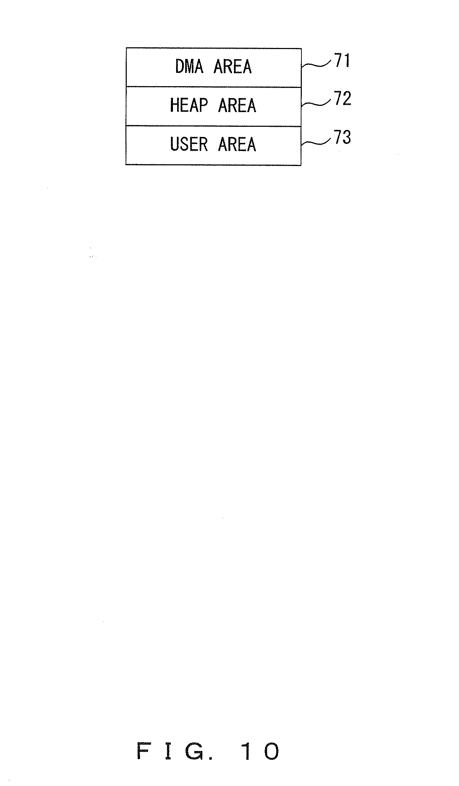

FIG. 10 illustrates an exemplary format of a memory area used by the boot loader in accordance with the present embodiment (Example 1). Information stored in the memory area used by the boot loader is a target of a memory dump. The memory area used by the boot loader includes a DMA area 71, a heap area 72, and a user area 73.

The DMA area 71 is a memory area used for DMA (direct memory access) transfer. The heap area 72 is a memory area which the boot loader 15 is capable of dynamically reserving. The user area is a memory area used by a predetermined program. As an example, the memory sizes of the DMA area 71, the heap area 72, and the user area 73 are, but are not limited to, fixed values.

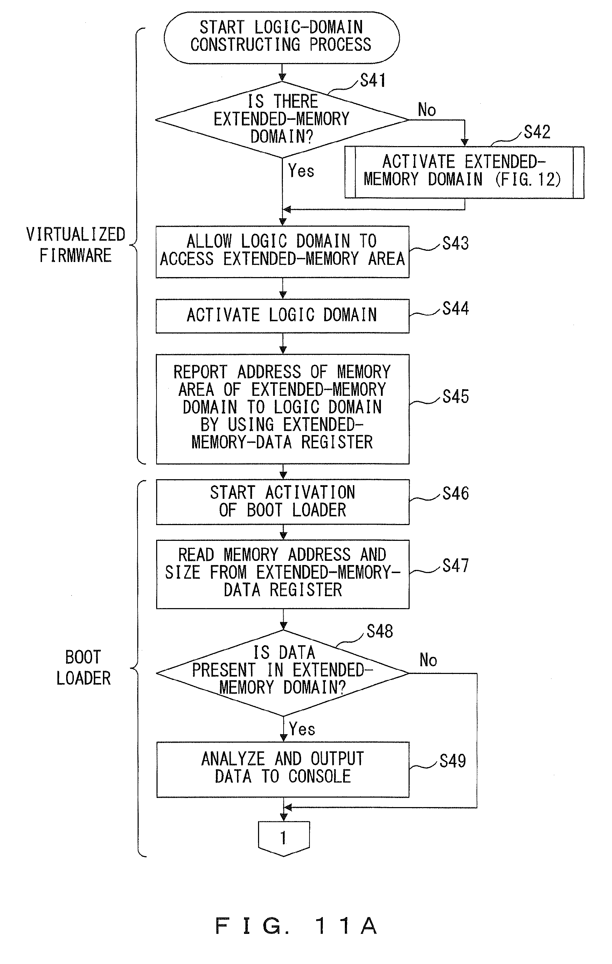

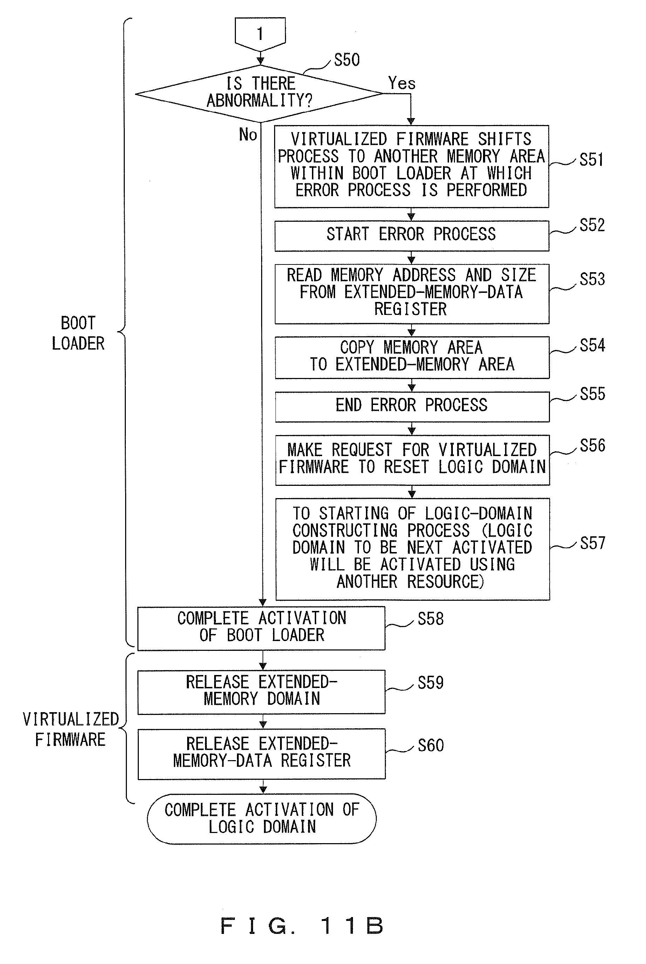

FIG. 11A and FIG. 11B illustrate exemplary flows of a logic-domain constructing process in accordance with the present embodiment (Example 1). The logic-domain constructing process illustrated in FIG. 11A and FIG. 11B includes an extended-memory domain constructing process, a memory dump analyzing process, and a boot-loader-execution completing process.

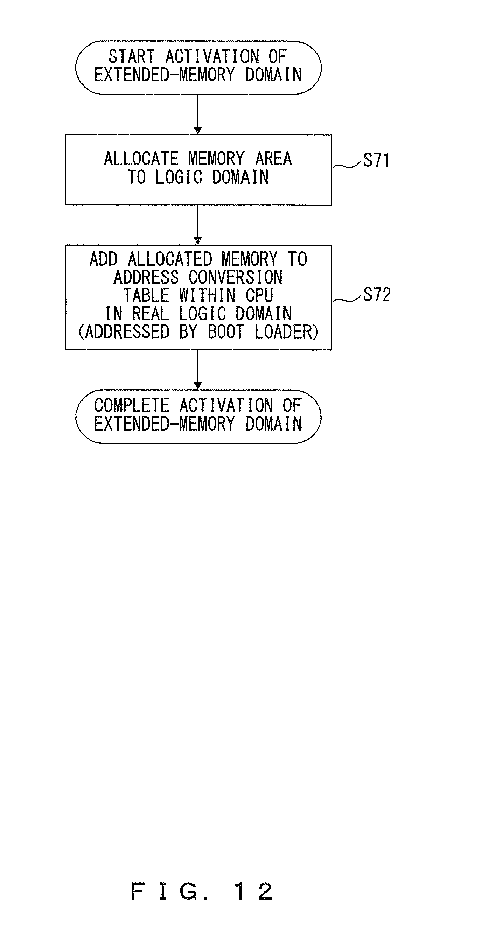

When a process for constructing the logic domain 50 is started, the virtualized firmware 16 determines whether there is an extended memory domain 56 in the main system 13 (S41). In this case, the virtualized firmware 16 reads a memory address and a memory size of a memory area of the extended memory domain 56 from the extended-memory-data register 24a. Using the read memory address and the read memory size, the virtualized firmware 16 accesses a memory area of the extended memory domain 56. When the virtualized firmware 16 determines that there is not an extended memory domain 56 as a result of the accessing ("No" in S41), the virtualized firmware 16 (the constructing unit 54) activates an extended memory domain 56 (S42). The process of S42 will be described with reference to FIG. 12.

When it is determined in S41 that there is an extended memory domain 56 ("Yes" in S41), i.e., when a request to reset the logic domain 50 is made in S56, which will be described hereinafter, and the process of S41 is performed again, the virtualized firmware 16 performs the following processes. That is, the virtualized firmware 16 allows the logic domain 50 to access a memory area of the extended memory domain 56 (S43). Also after the process of S42, the virtualized firmware 16 allows the logic domain 50 to access the memory area of the extended memory domain 56 (S43).

The virtualized firmware 16 activates the logic domain 50 (S44). Using the extended-memory-data register 24a, the virtualized firmware 16 reports the address of the memory area of the extended memory domain to the logic domain 50 (S45).

The boot loader 15 starts activation under control of the virtualized firmware 16 (S46). The boot loader 15 reads the memory address and the memory size of the memory area of the extended memory domain 56 from the extended-memory-data register 24a (S47). Using the read memory address and the read memory size of the memory area of the extended memory domain 56, the boot loader 15 accesses the memory area of the extended memory domain 56. When there is no data in the memory area of the extended memory domain 56 as a result of the accessing ("No" in S48), the process transitions to S50.

When there is data within the memory area of the extended memory domain 56 in S48 as a result of the accessing ("Yes" in S48), i.e., when a request to reset the logic domain 50 is made in S56, which will be described hereinafter, and the process of S48 is performed again, the boot loader 15 performs the following process. That is, the boot loader 15 (the analyzing unit 53) analyzes and outputs the data obtained via the accessing to a console (S49).

When an abnormality occurs in the boot loader 15 ("Yes" in S50), the boot loader 15 performs the following process under control of the virtualized firmware 16. That is, the boot loader 15 shifts the process to another memory area within the boot loader 15 that is different from the memory area in which the abnormality has occurred (S51). At this other memory area, the error processing unit 51 starts an error process (S52).

For access to the extended memory domain 56, firstly, the copy unit 52 reads the memory address and the memory size of the access destination from the extended-memory-data register 24 (S53). The copy unit 52 copies all information stored in the memory area which the boot loader 15 uses to the memory area of the extended memory domain 56 (S54). As a result, a process for collecting dumps in the memory area of the extended memory domain 56 (an error process) ends (S55).

Subsequently, the error processing unit 51 makes a request for the virtualized firmware 16 to reset the logic domain 50 (S56). After this, the process returns to a process for starting a logic-domain constructing (the beginning of FIG. 11A) (S57). Using another hardware resource 12, the virtualized firmware 16 activates a logic domain 50 to be next activated.

When an abnormality does not occur in S50 ("No" in S50), the activation of the boot loader 15 is completed (S58).

The virtualized firmware 16 releases the extended memory domain 56 (S18). Moreover, the virtualized firmware 16 releases the extended-memory-data register 24a (S60).

FIG. 12 illustrates an exemplary flow of a process for activating an extended memory domain in accordance with the present embodiment (Example 1). Upon starting of the activation of the extended memory domain 56, the virtualized firmware 16 (the constructing unit 54) allocates a memory area to the logic domain 50 as an extended memory domain 56 (S71). The allocated memory size is equal to or greater than the memory size of the boot loader 15 (e.g., 20MB, a fixed value).

The virtualized firmware 16 (the constructing unit 54) adds the allocated memory area to an address conversion table within the CPU 22 in a real logic domain addressed by the boot loader (S72). As a result, the CPU 22 may use the added memory area as the extended memory domain 56. The activation of the extended memory domain 56 is then completed.

In accordance with Example 1, in a virtualized firm environment, a memory dump area may be ensured in a volatile memory.

### (Example 2)

Next, Example 2 of the present embodiment will be described. In Example 2, when an error occurs in the boot loader 15, all contents of a memory area used by the boot loader 15 are copied to an extended memory domain and the boot loader is reset. When there is data within the extended memory domain in the activating of a logic domain, virtualized firmware transfers information copied to the memory area of the extended memory domain to a subsystem. In Example 2, components or functions similar to those described above are indicated by like signs so that their descriptions can be omitted.

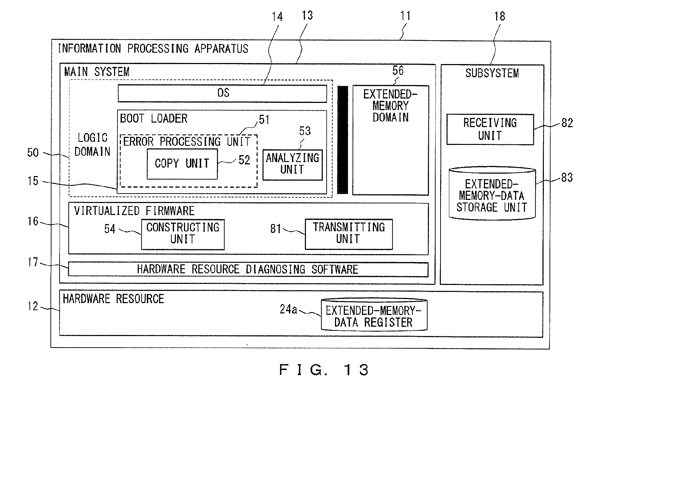

FIG. 13 illustrates an exemplary configuration of an information processing apparatus in accordance with the present embodiment (Example 2). In FIG. 13, the virtualized firmware 16 in FIG. 9 further includes the transmitting unit 81, the analyzing unit 53 is removed from the boot loader 15, and the subsystem 18 further includes a receiving unit 82 and an extended-memory-data storage unit 83.

The transmitting unit 81 transmits data stored in a memory area of the extended memory domain 56 (extended-memory data) to the subsystem 18. The receiving unit 82 receives and stores extended-memory data transmitted by the transmitting unit 81 in the extended-memory-data storage unit 83.

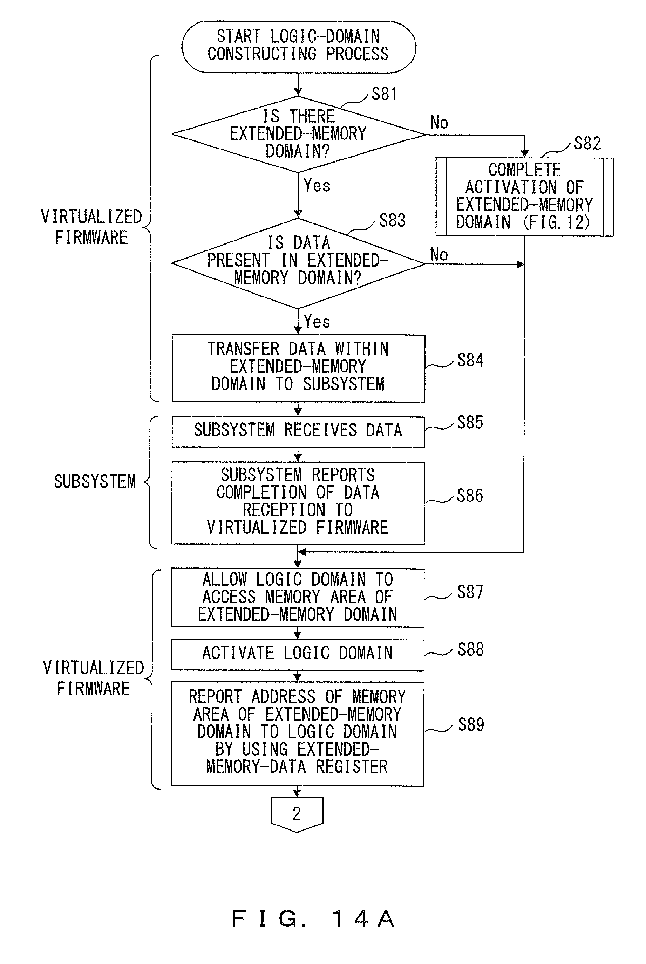

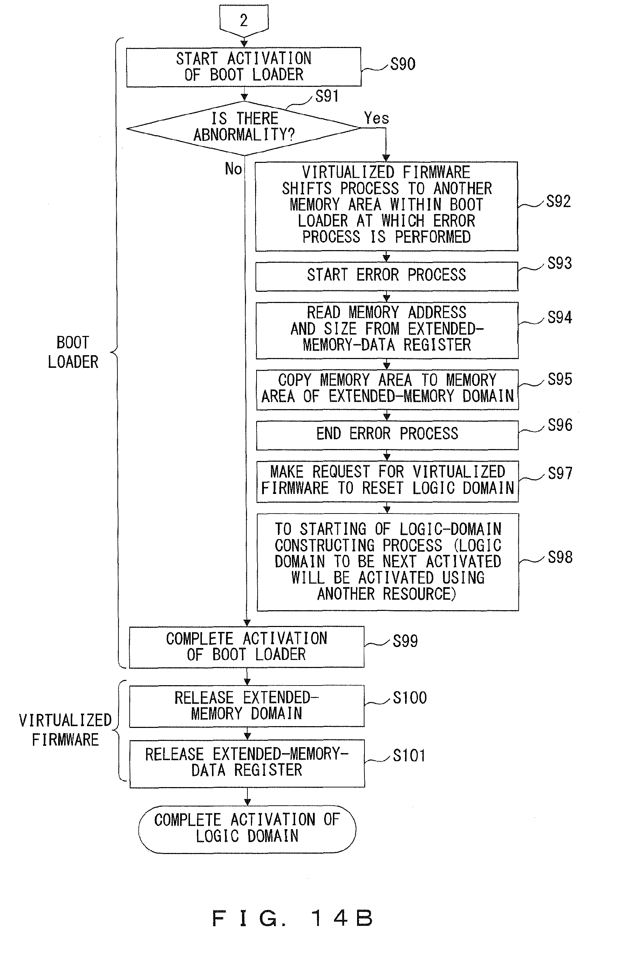

FIG. 14A and FIG. 14B illustrate exemplary flows of a logic-domain constructing process in accordance with the present embodiment (Example 2). When a process for constructing a logic domain is started, the virtualized firmware 16 determines whether there is an extended memory domain 56 in the main system 13 (S81). In this case, the virtualized firmware 16 reads a memory address and a memory size of a memory area of the extended memory domain 56 from the extended-memory-data register 24a. Using the read memory address and the read memory size, the memory area of the extended memory domain 56 is accessed. When the virtualized firmware 16 determines that there is not an extended memory domain 56 as a result of the accessing ("No" in S81), the virtualized firmware 16 (the constructing unit 54) activates an extended memory domain 56 (S82). Descriptions will not be given of the process of S82 since it is similar to the process in FIG. 12.

When it is determined in S81 that there is an extended memory domain 56 ("Yes" in S81), i.e., when a request to reset the logic domain 50 is made in S97, which will be described hereinafter, and the process of S81 is performed again, the virtualized firmware 16 performs the following processes. That is, the virtualized firmware 16 reads a memory address and a memory size of a memory area of the extended memory domain 56 from the extended-memory-data register 24a. Using the read memory address and the read memory size of the memory area of the extended memory domain 56, the virtualized firmware 16 accesses the memory area of the extended memory domain 56. When there is no extended-memory data in the memory area of the extended memory domain 56 as a result of the accessing ("No" in S83), the process transitions to S87.

In S83, when there is extended-memory data within the memory area of the extended memory domain 56 ("Yes" in S83), the virtualized firmware 16 (the transmitting unit 53) performs the following process. That is, the virtualized firmware 16 (the transmitting unit 53) transfers the extended-memory data obtained via the accessing to the subsystem 18 (S84).

The subsystem 18 (the receiving unit 82) receives and stores the extended-memory data transmitted by the virtualized firmware 16 in the extended-memory-data storage unit 83 (S85). The subsystem 18 reports the completion of data reception to the virtualized firmware 16 (S86).

The virtualized firmware 16 allows the logic domain 50 to access the memory area of the extended memory domain 56 (S87).

The virtualized firmware 16 activates the logic domain 50 (S88). The virtualized firmware 16 reports the memory address of the memory area of the extended memory domain 56 to the logic domain 50 via the extended-memory-data register 24a (S89).

The boot loader 15 starts activation under control of the virtualized firmware 16 (S90). When an abnormality occurs in the boot loader 15 ("Yes" in S91), the boot loader 15 performs the following process under control of the virtualized firmware 16. That is, the boot loader 15 shifts the process to another memory area within the boot loader 15 that is different from the memory area in which the abnormality has occurred (S92). At this other memory area, the error processing unit 51 starts an error process (S93).

For access to the extended memory domain 56, firstly, the copy unit 52 reads the memory address and the memory size of the access destination from the extended-memory-data register 24a (S94). The copy unit 52 copies data in the memory area which the boot loader 15 uses to the memory area of the extended memory domain 56 (S95). As a result, a process for collecting dumps in the memory area of the extended memory domain 56 (an error process) ends (S96).

Subsequently, the error processing unit 51 makes a request for the virtualized firmware 16 to reset the logic domain 50 (S97). After this, the process returns to a process for starting a logic-domain constructing (the beginning of FIG. 14A) (S98). Using another hardware resource 12, the virtualized firmware 16 activates a logic domain 50 to be next activated.

When an abnormality does not occur in S91 ("No" in S91), the activation of the boot loader 15 is completed (S99).

The virtualized firmware 16 releases the extended memory domain 56 (S100). Moreover, the virtualized firmware 16 releases the extended-memory-data register 24a (S101).

In accordance with Example 2, a memory dump of a boot loader may be transmitted to an external apparatus in order to analyze the memory dump on the external apparatus side. In addition, in a virtualized firm environment, a memory dump area may be ensured in a volatile memory.

The present embodiment has been described with reference to examples of a virtualized environment, but the present embodiment is not limited to a virtualized environment. As long as information stored in a memory area used by a boot loader can be saved, the present embodiment is not limited to an information processing apparatus in a virtualized environment.

The present embodiment is not limited to the embodiments described above, and various configurations or embodiments may be employed without departing from the spirit of the present embodiment.

The present embodiment allows a memory dump of a boot loader to be output.

## Claims

1. An information processing apparatus (1) comprising:
a boot processing unit (2, 15) configured to perform a boot process performed in a prior stage that includes processes up to activation of an operating system program by using a first storage area of a storage apparatus;
a storage area allocating unit (3, 54) configured to allocate a second storage area to the storage apparatus before the boot process is performed; and
an output unit (4, 52) configured to output first storage area information stored in the first storage area to the second storage area when an abnormality occurs in the boot process.

2. The information processing apparatus (1) according to claim 1, the information processing apparatus further comprising
a logic domain generating unit (6, 16) configured to allocate a hardware resource to a virtual machine for each logic domain so as to generate a logic domain, the logic domain being a unit of service for allocating the hardware resource to the virtual machine, wherein
the storage area allocating unit (3, 54) allocates the second storage area to the storage apparatus in relation to the logic domain that corresponds to the boot process when the second storage area is not present before the boot process is performed.

3. The information processing apparatus (1) according to claim 2, the information processing apparatus further comprising
a memory management storage unit (24) configured to store a value of a storage capacity of the second storage area and memory address information of a memory that is capable of allocating the second storage area, wherein
the storage area allocating unit (3, 54) allocates the second storage area to the storage apparatus by using the memory address information and a value that is equal to or higher than a value of a storage capacity of the first storage area when the second storage area is not present before the boot process is performed, and stores the memory address information and the value that is equal to or higher than the value of the storage capacity of the first storage area in the memory management storage unit, and
the output unit (4, 52) outputs the first storage area information stored in the first storage area to the second storage area by using a stored memory address information and a stored value that is equal to or higher than the value of the storage capacity of the first storage area.

4. The information processing apparatus (1) according to any of claims 1 to 3, the information processing apparatus further comprising
an analyzing unit (7, 53) configured to analyze the first storage area information when the first storage area information is present in the second storage area.

5. The information processing apparatus (1) according to any of claims 1 to 4, the information processing apparatus further comprising
a transmitting unit (8, 81) configured to transmit the first storage area information to an external apparatus before the boot process is performed when the first storage area information is present in the second storage area.

6. The information processing apparatus according to any of claims 1 to 5, the information processing apparatus further comprising
a releasing unit (9, 16) configured to release the second storage area after the boot process is completed.

7. A memory dump program for causing a computer to perform a controlling process of controlling a memory dump, the controlling process comprising:
allocating a second storage area to a storage apparatus before a boot process performed in a prior stage that includes processes up to activation of an operating system program is performed using a first storage area of the storage apparatus (S42), and
outputting first storage area information stored in the first storage area to the second storage area when an abnormality occurs in the boot process (S54).

8. The memory dump program according to claim 7, the controlling process further comprising:
allocating a hardware resource to a virtual machine for each logic domain so as to generate a logic domain, the logic domain being a unit of service for allocating the hardware resource to the virtual machine (S44), wherein
the allocating a second storage area allocates the second storage area to the storage apparatus in relation to the logic domain that corresponds to the boot process when the second storage area is not present before the boot process is performed (S42).

9. The memory dump program according to claim 8, wherein
the allocating a second storage area allocates the second storage area to the storage apparatus by using the memory address information indicating a address of an allocatable area in a memory and a value that is equal to or higher than a value of a storage capacity of the first storage area when the second storage area is not present before the boot process is performed, and stores the memory address information and the value that is equal to or higher than the value of the storage capacity of the first storage area in a memory management storage unit (S42), and
the outputting outputs the first storage area information stored in the first storage area to the second storage area by using a stored memory address information and a stored value that is equal to or higher than the value of the storage capacity of the first storage area (S54 to S55).

10. The memory dump program according to any of claims 7 to 9, the controlling process further comprising
analyzing the first storage area information when the first storage area information is present in the second storage area.

11. The memory dump program according to any of claims 7 to 9, the controlling process further comprising
transmitting the first storage area information to an external apparatus when the first storage area information is present in the second storage area before the boot process is performed.

12. The memory dump program according to any of claims 7 to 11, the controlling process further comprising
releasing the second storage area after the boot process is completed.

13. A memory dump method comprising:
allocating by a computer a second storage area to a storage apparatus before a boot process performed in a prior stage that includes processes up to activation of an operating system program is performed using a first storage area of the storage apparatus (S42), and
outputting by the computer first storage area information which is stored in the first storage area to the second storage area when an abnormality occurs in the boot process (S54).

14. The memory dump method according to claim 13, the memory dump method further comprising:
allocating by the computer a hardware resource to a virtual machine for each logic domain so as to generate a logic domain, the logic domain being a unit of service for allocating the hardware resource to the virtual machine (S44), wherein
the allocating a second storage area allocates the second storage area to the storage apparatus in relation to the logic domain that corresponds to the boot process when the second storage area is not present before the boot process is performed (S42).

15. The memory dump method according to claim 13, wherein
the allocating a second storage area allocates the second storage area to the storage apparatus by using the memory address information indicating a address of an allocatable area in a memory and a value that is equal to or higher than a value of a storage capacity of the first storage area when the second storage area is not present before the boot process is performed, and stores the memory address information and the value that is equal to or higher than the value of the storage capacity of the first storage area in a memory management storage unit (S42), and
the outputting outputs the first storage area information stored in the first storage area to the second storage area by using a stored memory address information and a stored value that is equal to or higher than the value of the storage capacity of the first storage area (S54 to S55).
